# EUROPEAN PATENT SPECIFICATION

(11) **EP 3 463 770 B1**
(45) Date of publication and mention of the grant of the patent: **14.04.2021**
(21) Application number: 16903439.4
(22) Date of filing: 31.05.2016
(51) Int. Cl.: B26D 3/06, B26D 7/08

(54) **A COLD KNIFE SYSTEM AND A METHOD FOR FORMING A COLD KNIFE WEAKENING LINE**
EIN KALTMESSERSYSTEM UND EIN VERFAHREN ZUM BILDEN EINER KALTMESSER-SCHWÄCHUNGSLINIE
SYSTEME DE LAME FROIDE ET PROCEDE DE FORMATION D'UNE LIGNE D'AFFAIBLISSEMENT PAR LAME FROIDE

(43) Date of publication of application: 10.04.2019
(73) Proprietor: Faurecia (China) Holding Co., Ltd., Shanghai 201109 (CN)
(72) Inventor: SHANG, Hao, Shanghai 201109 (CN)
(74) Representative: Plasseraud IP
(86) International application number: PCT/CN2016/084043
(87) International publication number: WO 2017/206054

(56) References cited:
- EP-A1- 1 177 878
- WO-A2-2007/045317
- DE-B3-102004 009 351
- DE-B3-102005 050 940
- DE-C- 180 371
- JP-A- 2002 172 589
- JP-A- 2008 284 653
- JP-A- 2014 200 865
- JP-B2- 4 575 584
- JP-B2- 4 834 607

## Description

### TECHNICAL FIELD

The present invention relates to cold knife weakening on a vehicle interior trim having weakening area such as an airbag cover. More particularly, the present invention relates to a release agent supply device for the cold knife weakening, and also relates to a cold knife system comprising such a device.

### BACKGROUND TECHNOLOGY

A vehicle interior trim, for example an instrument panel, is usually provided integrally with a weakening area, for example an airbag cover for developing an airbag when the latter is exploding under certain emergency conditions.

In the art, the airbag cover is a part of the interior trim located corresponding to the position of an airbag thereunder. In order to make the airbag break through the interior trim to provide protection as designed, the airbag cover is an area on the interior trim defined by break-scheduled lines, which may be also referred to as a split line, as a thin-walled portion for reliably opening the airbag by the deployment force thereof.

For the aesthetic appearance, these break-scheduled lines are usually weakening lines formed from the back side of a skin of the interior trim, so that these lines are invisible from the outside. These weakening lines are obtained by means of cold knife weakening, hot blade weakening, milling weakening or laser weakening, among which the cold knife weakening are widely employed.

When the weakening lines are cut by cold knife weakening, it further requires apply release agent in the weakening lines so as to prevent regluing in the following manufacturing process, as cold knife does not remove material and foam in the weakening line does not expand.

There are some solutions in the art to apply release agent in the weakening lines. EP1960165 has disclosed a device for cutting a weakening line in a film, wherein it provides a cold blade combined with a channel for providing liquid to the tip of the blade. Indeed, such a combined blade can simultaneously cut a weakening line and apply release agent. However, the device disclosed in EP1960165 is much more complicated, especially, than ordinary cold knife. In particularly, the blade or the cold knife shall be preciously manufactured so as to form a channel therein, which raises the cost and is hard to be adapted on traditional cold knife system.

Also, in the art, there are some separate release agent supply devices developed. These separate devices are consisted of a dispenser tank, a pin adapted to moving forward and backward in a preset frequency, a pneumatic pump adapted to control the liquid drop, and a senor adapted to detect the application accuracy of the release agent. Although these devices are capable of being attached to the ordinary cold knife, they have complicated components and structures *per se,* which also raises manufacturing cost and require frequent maintenance.

### DESCRIPTION OF THE INVENTION

The purpose of the present invention is to overcome these drawbacks as mentioned above.

According to the invention this is achieved by a cold knife system with a release agent supply, comprising:
- a wheel which is adapted to roll in a weakening line formed by cold knife weakening;
- a nozzle, the opening of the nozzle is close to the rim of the wheel with a small distance and orients to the wheel; and
- a release agent feeder which is in fluid communication with the nozzle for providing the release agent to the nozzle;
wherein the nozzle is adapted to supply the release agent to the wheel, and the wheel is adapted to apply the release agent to the weakening line, when rolling in the same.

Thanks to these arrangements, it is possible to use a simple device to apply release agent to the weakening line after the cold knife weakening without complicated and expensive structures as the ones disclosed in the art. Meanwhile, since the structure of the device according to the present invention is concise, it does not need frequent maintenance, which may greatly lower the cost and improve the manufacturing efficiency.

In various embodiments of the device according to the invention, one may possibly also have recourse to one and/or the other of the following arrangements:
- the wheel has a thickness comprised between 1.5mm to 3mm, so that the wheel is adapted to cover or partly enter into the weakening line so as to smoothly and comprehensively apply the release agent;
- the wheel has a rolling speed comprised between 20mm/s to 40mm/s, preferably 35mm/s, so that the release agent can be stably applied into the weakening line;
- it further comprises a holder adapted to at least hold the wheel and exert a pressure to the weakening line, so that the wheel can be positioned in a relative fixed way and the pressure exerted thereon may press the weakening line to open so as to receive the release agent in a more effective fashion; in addition, the wheel can be arranged and held in other known manner, as long as it can be positioned substantively vertically on the surface of the interior trim and come into contact with weakening line and roll therein;
- the release agent feeder comprises a controllable pumper for pumping the release agent to the nozzle, and the controllable pumper is adapted to control the releasing speed of the release agent at the opening of the nozzle, so that the release agent can be applied on the weakening line in a controllable manner;
- the releasing speed is preferably comprised between 0.05g/s and 0.15g/s, so that the release agent is adapted to be continuously and smoothly applied;
- the weakening line has a residual thickness comprised between 0.5mm and 0.7mm, which is in favor of the profile of weakening line forming a standard airbag cover formed on the vehicle trim part;
- the small distance is comprised between 1mm and 5mm, so that the nozzle will not interfere with the movement of the wheel while adequately providing release agent to the rim of the wheel without leaking the release agent beyond the range of rim of the wheel;

According to the invention, the cold knife system for forming a cold knife a weakening line on an automobile interior trim part, comprising also:
- a cold knife for cutting the weakening line on the surface of the automobile interior trim part;
- a release agent supply device as mentioned above; and
- a connector which connects the cold knife to the release agent supply device and keeps a distance therebetween, so that they do not interfere with each other.

With these arrangements, it is possible to obtain an improved cold knife system which can cut weakening lines and apply release agent in the same system without complicated structures, which lowers the cost and improves the manufacturing effect.

Alternatively, the distance between the cold knife and the release agent supply device is comprised between 10cm and 20cm, so that, on the one hand, the cold knife and the release agent do not interfere with each other when working, and on the other hand, they are close enough to each other so as to form a compact couple which is adapted to be installed on a single arm, for example a robot arm, so that it is more feasible to improve the current cold knife device in an easy and cost effective manner.

Preferably, the automobile interior trim part is made from PVC, TPO or PU.

According to another aspect of the present invention, it further relates to a method for forming a cold knife weakening line on an automobile interior trim part, comprising the following steps:
- cutting a weakening line on the surface of the automobile interior trim part;
- applying the release agent in the weakening line by means of a release agent supply device as mentioned above.

With the above arrangements, during the process of forming a weakening line, the release agent is adapted to be applied in a relatively simple and stable manner.

In general, the structure of present invention is concise, and it can reduce production cost, improve production efficiency, and easy to use while providing the above functions.

### BRIEF DESCRIPTION OF THE FIGURES

It should be understood that all features, alternatives and/or embodiments of the present invention can be associated according to various combinations in so far as they are not incompatible or exclusive with each other.

Further features and advantages of the invention will appear from the following description of embodiments of the invention, given as non-limiting examples, with reference to the accompanying drawings listed hereunder.
- Figure 1 is a lateral view of a release agent supply device according to the present invention;
- Figure 2 is a front view of a wheel of the release agent supply device according to the present invention;
- Figure 3 is a perspective view of a release agent supply device according to the present invention;
- Figure 4 is a perspective view of a cold knife system according to the present invention; and
- Figure 5 is a perspective view of a cold knife system according to the present invention from another angle.

### MORE DETAILED DESCRIPTION

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

By referring to the embodiments and figures, the present invention is described. In the figures, the same references are used to denote identical or similar items.

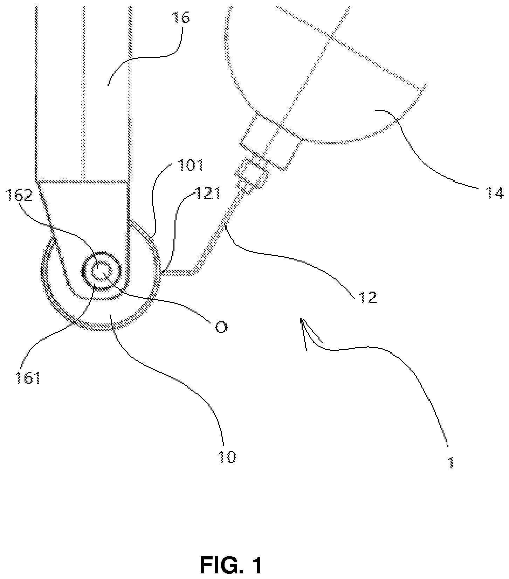

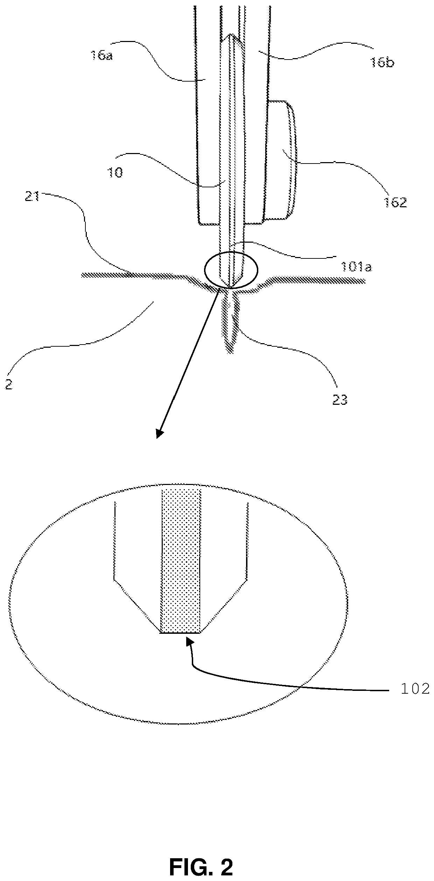

Figures 1 and 2 show a preferred embodiment of a release agent supply device as defined by the present invention. The release agent supply device 1 is adapted to supply release agent in liquid to weakening line 23 formed on the surface or skin 21 of a vehicle trim part 2, such as an instrument panel, made from for example PVC, TPO or PU, which defines an area of an airbag cover beneath which an airbag is located. The weakening line 23 has a residual thickness comprised between 0.5mm and 0.7mm and is obtained by cold knife weakening, which will be discussed hereinafter.

According to the preferred embodiment of the invention shown in Figures 1 and 2, the release agent supply device 1 at least comprises the following parts:
- a wheel 10, which is adapted to roll in the weakening line, in a plane substantially vertical to the plane where the surface or skin 21 of a vehicle trim part 2 locates; in addition, the wheel 10 comprises a rim 101 which contacts the weakening line, and is adapted to spin with respect to its centre O;
- a nozzle 12, which is in the form of a needle, wherein the opening 121 of the nozzle is close to the rim 101 of the wheel 10 with a small distance d1, comprised between 1mm and 5mm, and orients to the wheel, especially to the center O of the wheel; the nozzle is located in the same plane of the wheel or form a slight angle therebetween or with a small displacement;
- a release agent feeder 14, which is in fluid communication with the nozzle 12 for providing the release agent to the later; wherein the nozzle 12 is adapted to supply the release agent to the wheel 10, and the wheel 10 is adapted to apply the release agent to the weakening line 23, when rolling in the same.

Alternatively, the wheel 10 is made of metal or plastic, and the rim 101 of the wheel 10 has a thickness comprised between 1.5mm to 3mm corresponding to the width of the weakening line whose cross section is in the form of "V" or "U". In addition, in order to obtain a compact design, the diameter of the wheel is comprised between 1cm and 3cm, which is adapted to flexibly roll in the weakening line and apply the release agent in a desired manner.

Alternatively, as shown in Figure 2, the wheel has a various thickness which is thicker in the centre area and thinner around the rim, so as to provide required thickness in the rim and overall strength to the wheel. Moreover, the face 101a of the rim 101 which contacts the weakening line is arranged to retain the release agent when receiving the same from the nozzle 12 while almost fully applying the release agent to the weakening line when rolling in the latter.

In addition, also as shown in an enlarged part of the wheel in Figure 2, the running surface 102 of the rim may be flat or it may be rough or having a tread. An advantage of a rough surface or a surface having a tread is that the amount of release agent that adheres to the wheel can be larger than in the case of a flat surface. Another advantage of a rough surface or a surface having a tread is that the grip of the wheel on the weakening line can be better.

Advantageously, the opening 121 of the nozzle is located at or above the level of the center O of the wheel and in the upstream of the rolling direction of the wheel.

Advantageously, the release agent feeder 14 comprises a controllable pumper for pumping the release agent to the nozzle 12, so that the controllable pumper is adapted to control the releasing speed of the release agent at the opening of the nozzle, where the releasing speed is for example comprised between 0.05g/s and 0.15g/s.

Preferably, the release agent supply device 1 further comprises a holder 16 adapted to at least hold the wheel and exert a pressure to the weakening line.

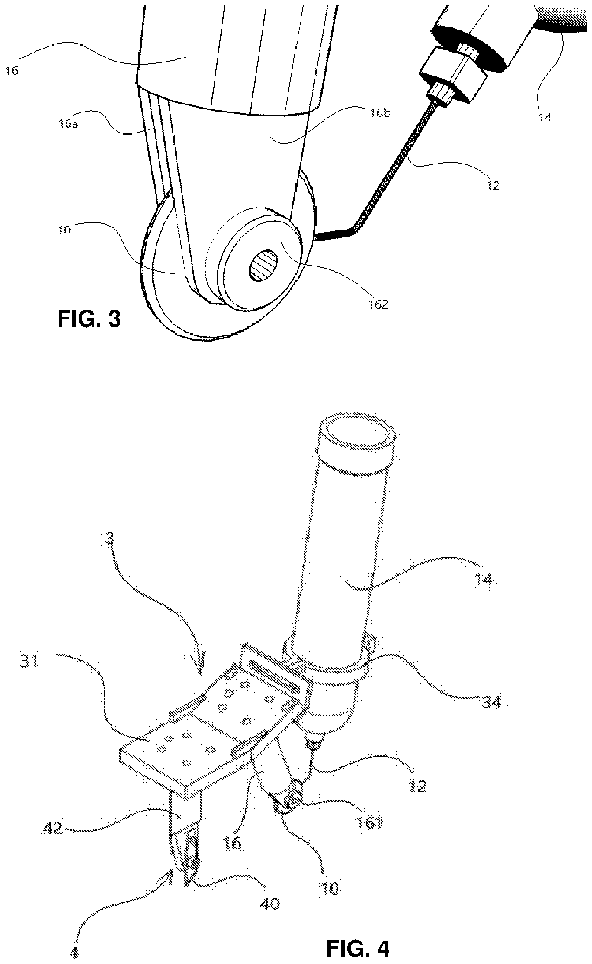

As can be observed in Figures 2 and 3, the holder 16 is in the form of a reversed "U" which comprises two arms 16a and 16b, a pin 161 penetrates the end of each arm and also traverses the center O of the wheel, so that the wheel is fixed between the two arms and is adapted to spin around the pin 161.

In addition, the pin 161 is fixed by a fastener 162 on the external side of the arm 16b, and the fastener 162 is adapted to clamp the arms 16a and 16b so as to make them tightly hold the wheel 10, through which the wheel 10 is stably fixed on the holder with little play between the arms while spinning around the pin 161. Moreover, the pin 161 and the fastener 162 is installed in a removable manner, so that it is possible to be released to change the wheel when necessary, especially when the wheel is broken or need to change the profile for different types of the weakening line.

Furthermore, in order to spin smoothly between the arms, the internal side of the arms and the surface of the wheel preferably have smooth face, or are proceeded by regular lubrication, such as lubricating coating.

Preferably, the holder 16 is adapted to exert a force to the wheel, and thus the wheel applies a pressure to the weakening line. By doing so, when the wheel presses the weakening line, the weakening line is tended to open its cut, so that the release agent more smoothly flows into the bottom of the weakening line.

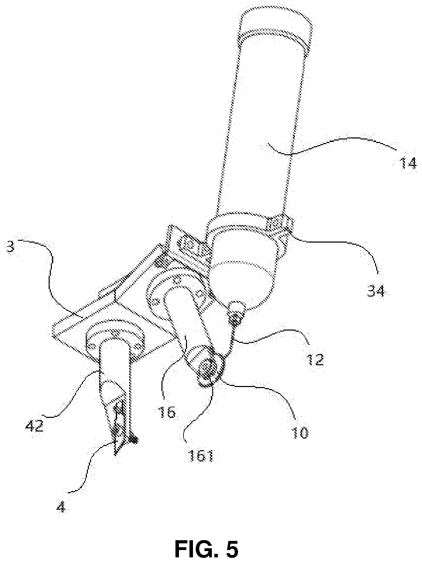

Figures 4 and 5 shows a preferred embodiment of a cold knife system for forming a cold knife a weakening line on an automobile interior trim part, which comprises:
- a cold knife 4 for cutting the weakening line on the surface of the automobile interior trim part;
- a release agent supply device 1 as mentioned above; and
- a connector 3 which connects the cold knife 4 to the a release agent supply device 1 and keeps a distance d2 between them, so that they do not interfere with each other.

It can be noticed that the cold knife 4 can be any known cold knife or blade with a cutting edge 40 which is adapted to cut a weakening line on the trim part. The cold knife 4 is fixed on a knife holder 42 which is installed on the base 31 of the connector 3.

In addition, a release agent supply device 1 is fixed on its holder 16 which is installed on the base 31 of the connector 3. As shown in this embodiment, the release agent feeder 14 in the form of a tank is also attached to the bottom 31 of the connector by means of a ring clamp 34, and the nozzle 12 is fixed to the bottom of the tank.

Advantageously, the distance d2 between the cold knife 4 and the release agent supply device 1 is comprised between 10cm and 20cm.

Advantageously, the connector 3 is designed in a way that makes the holders 16 and 42 orienting in different directions, which means they are not parallel to each other. In particular, the base 31 of the connector 3 comprises two parts extending in two planes with angle therebetween, wherein the angle is comprised between 100 and 170 degrees.

In addition, thanks to the arrangement of the connector 3, an ordinary cold knife is adapted to be coupled with a release agent release agent supply device according to the present invention, so that the release agent release agent supply 1 can be attached to an existing cold knife system without greatly modifying the latter.

Preferably, such a cold knife system is adapted to be installed on a mechanical arm or automatic arm which may be programmed to travel according to a preset path.

In addition, a method for forming a cold knife weakening line on an automobile interior trim part may proceed, *inter alia,* in the following manner.

Firstly, the cold knife 4 is positioned above an interior trim part and is driven to cut a weakening line along a preset path which for example has a shape of "U", wherein the weakening line cut by the cold knife has a residual thickness comprised between 0.5mm and 0.7mm, and the cross section of the cut is in the form of "V" or "U" corresponding to the cross section of the cutting edge of the cold knife.

Secondly, after the weakening line being cut, a release agent supply device 1 according to the present invention is positioned on it, and the release agent supply device 1 begins to roll along the path of the weakening line at a rolling speed comprised between 20mm/s to 40mm/s, preferably with a pressure so that the weakening line is tended to open to receive release agent.

When rolling in the weakening line, the release agent feeder 14 supplies release agent, preferably by means of a controllable pumper, to the nozzle 12. Then, the release agent flows from the opening 121 of the nozzle 12 to the rim 101 of the wheel 10, wherein the releasing speed is between 0.05g/s and 0.15g/s. Accordingly, with the rolling of the wheel, the release agent is applied to the part of the weakening line which contacts with the wheel.

In this case, the release agent is applied to the weakening line, and after the wheel rolls all along the path of the weakening line, the weakening line is fully filled with the release as required, and is ready for the next process, such as heating.

Advantageously, when the cold knife system according to the present invention is used, the weakening line is adapted to be cut and applied with the release agent by means of a single mechanical arm, which greatly reduces the manufacturing cost. In addition, since the mechanical arm is adapted to be programmed to precisely travel in a preset path, the wheel can precisely roll in the weakening line so as to apply the release agent thereto.

Those skilled in the art know many embodiments and variants and improvements. Particularly, it should be noted that, otherwise explicitly mentioned, all above described features, alternatives and/or embodiments of the present invention can be combined with each other as far as they are not incompatible or mutually exclusive of others. All such other embodiments, changes, and modifications are intended to come within the scope of the appended claims. For example, the wheel can be hold by magnetic force without physical and direct holding by a holder, the release agent supply device further comprises a detector which is adapted to detect and inspect the quality of the application of the release agent, and the nozzle comprises anti clogging means for preventing clogging of the release agent therein.

The abovementioned embodiments are used as examples and cannot be construed as limiting the scope of the utility model. On the basis of this, a man skilled in the art could expect other embodiments having same functions within the scope of protection of the present application.

## Claims

1. A cold knife system for forming a weakening line on an automobile interior trim part, comprising:
- a cold knife (4) for cutting the weakening line on the surface of the automobile interior trim part;
- a release agent supply device; and
- a connector (3) which connects the cold knife (4) to the release agent supply device and keeps a distance therebetween, so that they do not interfere with each other, wherein the release agent supply device comprising:
- a wheel (10) which is adapted to roll in a weakening line (23) formed by cold knife weakening;
- a nozzle (12), the opening (121) of the nozzle is close to the rim of the wheel (10) with a small distance and orients to the wheel (10); and
- a release agent feeder (14) which is in fluid communication with the nozzle (12) for providing the release agent to the nozzle (12);
wherein the nozzle (12) is adapted to supply the release agent to the wheel (10), and the wheel (10) is adapted to apply the release agent to the weakening line (23), when rolling therein.

2. The cold knife system according to claim 1, wherein the wheel (10) has a thickness comprised between 1.5mm to 3mm.

3. The cold knife system according to claim 1, wherein the wheel (10) has a rim comprising a rough surface or a tread.

4. The cold knife system according to claim 1, wherein the wheel (10) has a rolling speed comprised between 20mm/s to 40mm/s, preferably 35mm/s.

5. The cold knife system according to claim 1, wherein it further comprises a holder (16) adapted to at least hold the wheel (10) and exert a pressure to the weakening line (23).

6. The cold knife system according to claim 1, wherein the release agent feeder (14) comprises a controllable pumper for pumping the release agent to the nozzle (12).

7. The cold knife system according to claim 6, wherein the controllable pumper is adapted to control the releasing speed of the release agent at the opening (121) of the nozzle.

8. The cold knife system according to claim 7, wherein the releasing speed is comprised between 0.05g/s and 0.15g/s.

9. The cold knife system according to claim 1, wherein the weakening line (23) has a residual thickness comprised between 0.5mm and 0.7mm.

10. The cold knife system according to claim 1, wherein the small distance is comprised between 1mm and 5mm.

11. The cold knife system according to claim 1, wherein the distance is comprised between 10cm and 20cm.

12. The cold knife system according to claim 1, wherein the automobile interior trim part (2) is made from PVC, TPO or PU.

13. A method for forming a cold knife weakening line on an automobile interior trim part, comprising the following steps:
- cutting a weakening line on the surface of the automobile interior trim part by means of a cold knife system according to any one of claims 1 to 12;
- applying the release agent in the weakening line by means of a release agent supply device of the cold knife system.

## Patentansprüche

1. Kaltmesser-System zum Bilden einer Schwächungslinie an einem Automobilinnenraum-Sichtteil, umfassend:
- ein Kaltmesser (4) zum Schneiden der Schwächungslinie an der Oberfläche des Automobilinnenraum-Sichtteils;
- eine Freigabemittel-Liefervorrichtung; und
- ein Verbindungselement (3), welches das Kaltmesser (4) mit der Freigabemittel-Liefervorrichtung verbindet und eine Distanz dazwischen hält, so dass sie einander nicht beeinträchtigen,
wobei die Freigabemittel-Liefervorrichtung umfasst:
- ein Rad (10), welches dazu eingerichtet ist, in einer Schwächungslinie (23) zu rollen, welche durch Kaltmesser-Schwächung gebildet ist;
- eine Düse (12), wobei die Öffnung (121) der Düse nahe zu dem Rand des Rads (10) mit einer kleinen Distanz ist und das Rad (10) orientiert; und
- ein Freigabemittel-Zufuhrelement (14), welches in Fluidverbindung mit der Düse (12) ist, um das Freigabemittel an die Düse (12) bereitzustellen;
wobei die Düse (12) dazu eingerichtet ist, das Freigabemittel an das Rad (10) zu liefern, und das Rad (10) dazu eingerichtet ist, das Freigebemittel auf die Schwächungslinie (23) aufzubringen, wenn es darin rollt.

2. Kaltmesser-System nach Anspruch 1, wobei das Rad (10) eine Dicke aufweist, welche zwischen 1,5mm und 3mm beträgt.

3. Kaltmesser-System nach Anspruch 1, wobei das Rad (10) einen Rand aufweist, welcher eine raue Oberfläche oder ein Profil umfasst.

4. Kaltmesser-System nach Anspruch 1, wobei das Rad (10) eine Rollgeschwindigkeit aufweist, welche zwischen 20mm/s und 40mm/s beträgt, vorzugsweise 35mm/s.

5. Kaltmesser-System nach Anspruch 1, wobei es ferner eine Halterung (16) umfasst, welche dazu eingerichtet ist, wenigstens das Rad (10) zu halten und eine Kraft auf die Schwächungslinie (23) auszuüben.

6. Kaltmesser-System nach Anspruch 1, wobei das Freigabemittel-Zufuhrelement (14) eine steuerbare Pumpe zum Pumpen des Freigabemittels zu der Düse (12) umfasst.

7. Kaltmesser-System nach Anspruch 6, wobei die steuerbare Pumpe dazu eingerichtet ist, die Freigabegeschwindigkeit des Freigabemittels an der Öffnung (121) der Düse zu steuern.

8. Kaltmesser-System nach Anspruch 7, wobei die Freigabegeschwindigkeit zwischen 0,05g/s und 0,15g/s beträgt.

9. Kaltmesser-System nach Anspruch 1, wobei die Schwächungslinie (23) eine Restdicke aufweist, welche zwischen 0,5mm und 0,7mm beträgt.

10. Kaltmesser-System nach Anspruch 1, wobei die kleine Distanz zwischen 1mm und 5mm beträgt.

11. Kaltmesser-System nach Anspruch 1, wobei die Distanz zwischen 10cm und 20cm beträgt.

12. Kaltmesser-System nach Anspruch 1, wobei das Automobilinnenraum-Sichtteil (2) aus PVC, TPO oder PU hergestellt ist.

13. Verfahren zum Bilden einer Kaltmesser-Schwächungslinie an einem Automobilinnenraum-Sichtteil, umfassend die folgenden Schritte:
- Schneiden einer Schwächungslinie an der Oberfläche des Automobilinnenraum-Sichtteils mittels eines Kaltmesser-Systems nach einem der Ansprüche 1 bis 12;
- Aufbringen des Freigabemittels in die Schwächungslinie mittels einer Freigabemittel-Liefervorrichtung des Kaltmesser-Systems.

## Revendications

1. Système de lame froide pour former une ligne d'affaiblissement sur une partie de garniture intérieure d'automobile, comprenant :
- une lame froide (4) pour découper la ligne d'affaiblissement sur la surface de la partie de garniture intérieure d'automobile ;
- un dispositif d'amenée d'agent de libération ; et
- un connecteur (3) qui connecte la lame froide (4) au dispositif d'amenée d'agent de libération et maintient une distance entre ceux-ci, de manière à ce qu'ils n'interfèrent pas l'un avec l'autre,
dans lequel le dispositif d'amenée d'agent de libération comprend :
- une roue (10) qui est adaptée à rouler dans une ligne d'affaiblissement (23) formée par affaiblissement par lame froide ;
- une buse (12), l'ouverture (121) de la buse est proche de la jante de la roue (10) d'une petite distance et s'oriente vers la roue (10) ; et
- un dispositif d'alimentation en agent de libération (14) qui est en communication fluidique avec la buse (12) pour fournir l'agent de libération à la buse (12) ;
dans lequel la buse (12) est adaptée à amener l'agent de libération à la roue (10), et la roue (10) est adaptée à appliquer l'agent de libération à la ligne d'affaiblissement (23), lorsqu'elle roule dans celle-ci.

2. Système de lame froide selon la revendication 1, dans lequel la roue (10) présente une épaisseur comprise entre 1,5 mm et 3 mm.

3. Système de lame froide selon la revendication 1, dans lequel la roue (10) présente une jante comprenant une surface rugueuse ou une bande de roulement.

4. Système de lame froide selon la revendication 1, dans lequel la roue (10) présente une vitesse de roulement comprise entre 20 mm/s et 40 mm/s, de préférence de 35 mm/s.

5. Système de lame froide selon la revendication 1, dans lequel il comprend en outre un support (16) adapté à retenir la roue (10) et à exercer une pression sur la ligne d'affaiblissement (23).

6. Système de lame froide selon la revendication 1, dans lequel le dispositif d'alimentation en agent de libération (14) comprend un dispositif de pompage pouvant être commandé pour pomper l'agent de libération vers la buse (12).

7. Système de lame froide selon la revendication 6, dans lequel le dispositif de pompage pouvant être commandé est adapté à commander la vitesse de libération de l'agent de libération au niveau de l'ouverture (121) de la buse.

8. Système de lame froide selon la revendication 7, dans lequel la vitesse de libération est comprise entre 0,05 g/s et 0,15 g/s.

9. Système de lame froide selon la revendication 1, dans lequel la ligne d'affaiblissement (23) présente une épaisseur résiduelle comprise entre 0,5 mm et 0,7 mm.

10. Système de lame froide selon la revendication 1, dans lequel la petite distance est comprise entre 1 mm et 5 mm.

11. Système de lame froide selon la revendication 1, dans lequel la distance est comprise entre 10 cm et 20 cm.

12. Système de lame froide selon la revendication 1, dans lequel la partie de garniture intérieure d'automobile (2) est composée de PVC, TPO ou PU.

13. Procédé pour former une ligne d'affaiblissement par lame froide sur une partie de garniture intérieure d'automobile, comprenant les étapes suivantes :
- la découpe d'une ligne d'affaiblissement sur la surface de la partie de garniture intérieure d'automobile au moyen d'un système de lame froide selon l'une quelconque des revendications 1 à 12 ;
- l'application de l'agent de libération dans la ligne d'affaiblissement au moyen d'un dispositif d'amenée d'agent de libération du système de lame froide.
